# EUROPÄISCHE PATENTSCHRIFT

(11) **EP 1 204 588 B1**
(45) Veröffentlichungstag und Bekanntmachung des Hinweises auf die Patenterteilung: **26.03.2003**
(21) Anmeldenummer: 00952896.9
(22) Anmeldetag: 06.07.2000
(51) Int. Cl.: C01B 13/11, C01B 13/00

(54) **VORRICHTUNG ZUR ERZEUGUNG EINES PLASMAS ZUR HERSTELLUNG VON OZON UND/ODER SAUERSTOFFIONEN IN LUFT**
DEVICE FOR PREPARING A PLASMA FOR THE PRODUCTION OF OZONE AND/OR OXYGEN IONS IN THE AIR
DISPOSITIF DE PRODUCTION D'UN PLASMA POUR LA PRODUCTION D'OZONE ET/OU D'IONS OXYGENE DANS L'AIR

(30) Priorität: 07.07.1999 DE 19931366
(43) Veröffentlichungstag der Anmeldung: 15.05.2002
(73) Patentinhaber: T.E.M.! Technische Entwicklungen und Management GmbH, 63840 Hausen (DE)
(72) Erfinder: RUMP, Hanns, D-63840 Hausen (DE); KIESEWETTER, Olaf, D-98716 Geschwenda (DE)
(74) Vertreter: Mierswa, Klaus, Dipl.-Ing.
(86) Internationale Anmeldenummer: DE0002164
(87) Internationale Veröffentlichungsnummer: WO01002291

(56) Entgegenhaltungen:
- EP-A- 0 537 613
- DE-A- 3 424 889
- US-A- 3 954 586
- US-A- 4 049 707
- US-A- 4 737 885
- PATENT ABSTRACTS OF JAPAN vol. 1997, no. 03, 31. März 1997 (1997-03-31) & JP 08 310801 A (NICHIMEN DENSHI R &D KK), 26. November 1996 (1996-11-26)
- PATENT ABSTRACTS OF JAPAN vol. 1996, no. 07, 31. Juli 1996 (1996-07-31) & JP 08 081205 A (TOSHIBA CORP), 26. März 1996 (1996-03-26)
- PATENT ABSTRACTS OF JAPAN vol. 014, no. 453 (C-0764), 28. September 1990 (1990-09-28) & JP 02 180703 A (NORITAKE CO LTD), 13. Juli 1990 (1990-07-13)

## Beschreibung

### Technisches Gebiet:

Die Erfindung betrifft eine Vorrichtung zur Erzeugung eines Plasmas zur Herstellung von Ozon und und/oder Sauerstoffionen in Luft, nach dem Prinzip der dielektrisch behinderten Entladung, mit zwei Elektroden, an welche eine Hochspannung eines Wechselspannungsgenerators gelegt ist und zwischen welchen ein elektrisch isolierender Körper angeordnet ist, gemäß dem Oberbegriff des Patentanspruchs 1.

### Stand der Technik:

Seit etwa 100 Jahren ist die Erzeugung von Ozon durch die Herstellung eines Plasmas nach dem Prinzip der dielektrisch behinderten Entladung bekannt. In Anlagen zur oxidativen Behandlung von Luft zum Zweck der Geruchsbekämpfung und der Abtötung luftgetragener Keime wird insbesondere die Siemens-Röhre eingesetzt. Dabei wird angestrebt, oxidierbare Luftbestandteile durch die Behandlung der Luft mit Sauerstoff-Ionen und mit Ozon (O⁻ und O₃) zu zerstören.

Bei der Siemens-Röhre ist ein röhrenförmiger Glaskörper vorhanden, vorzugsweise aus Bor-O-Silikat oder aus Quarzglas, der innen mit einer aus leitfähigem Material bestehenden Elektrode ausgekleidet ist, die eng und möglichst ohne Luftspalt an der inneren Glasoberfläche anliegt. Die äußere Hülle der Röhre bildet ein ebenfalls enganliegendes Netz aus z.B. Stahlgewebe, welches die äußere Elektrode darstellt. Wird eine hohe Wechselspannung, zum Beispiel von 3-6 kV an die innere und die äußere Elektrode angelegt, kommt es zu elektrischen Entladungserscheinungen. Dabei werden Ionen und Ozon (O⁻ und O₃) erzeugt.

Aus der WO/98/26482 ist ein nach dem gleichen physikalischen Prinzip aufgebautes flaches Modul bekannt geworden, bei dem eine Elektrode zwischen zwei Glasplatten eingeschlossen ist. Ein Metallgitter, bzw. Metallnetz bedeckt die äußeren, der Luft zugänglichen Glasflächen und bildet die äußere Elektrode. Die hohe Wechselspannung wird an die äußere und innere Elektrode angeschlossen, wobei erfindungsgemäß das Erdpotential stets außen ist, bzw. an jener Seite, welche berührt werden könnte.

Nachteilig bei dieser Konstruktion als auch bei der Siemens-Röhre ist der relativ große und kostenintensive Aufbau, weil die äußere und die innere Elektrode fest und ohne Zwischenraum auf dem Glasdielektrikum aufliegen muß. Eine industrielle, kostengünstige Fertigung dieser Module ist schwierig. Außerdem läßt die Wirksamkeit nach, wenn die Oberfläche der Gläser und die Strukturen zwischen den äußeren Drahtnetzen verschmutzt sind. Der Wirkungsgrad dieser Technik in Bezug auf lufttechnische Anwendungen erscheint ganz allgemein verbesserungsfähig, wenn der physikalische Wirkungsmechanismus betrachtet wird.

Die Funktion der dielektrisch behinderten elektrischen Entladung läßt sich wie folgt erklären: Zwischen den an eine hohe Wechselspannung, zum Beispiel 5kV bei einer Frequenz von 30kHz, angeschlossenen Elektroden befindet sich ein Dielektrikum, zumeist aus Glas. Die allgemeine Funktion der beiden dielektrischen Barrieren besteht darin, die Bewegung der Elektronen zur Elektrode zu behindern und schließlich zu unterbrechen. Die Elektronen werden nämlich in ihrer Bewegung zur Anode durch das Dielektrikum nicht nur aufgehalten, sondern aufgestaut, wodurch sich ein Gegenfeld zu dem den Elektronenstrom treibenden äußeren Feld aufbaut, das seinerseits solange anwächst, bis sich das äußere Feld und das Gegenfeld gerade kompensieren und der Elektronenstrom folglich zum Erliegen kommt (Spiegelladung).

Die Schalteigenschaften der Barriere bestimmen sich aus den geometrischen Gegebenheiten des resultierenden Kondensators sowie aus den Materialeigenschaften des Dielektrikums. Durch geeignete Wahl der Parameter lassen sich extrem schnelle, vor allem aber auch zuverlässige Entladungsunterbrechungen realisieren. Diese sind in den dielektrisch behinderten Entladungen von essentieller Bedeutung, da sie wesentlich dazu beitragen, dass sich das Entladungsplasma nicht sprunghaft in Richtung thermisches Gleichgewicht entwickelt.

Das Gegenteil soll nämlich erreicht werden: Es sollen möglichst viele schnelle Elektronen erzeugt werden, die ihre kinetische Energie durch inelastische Stöße gezielt auf die atomaren Zustände übertragen, die am effektivsten zur gewünschten Plasma- und Ozonerzeugung beitragen, wobei der Energietransfer durch Elektronenstöße in Verlustkanälen so gering wie möglich gehalten werden soll.

Das resultierende Erscheinungsbild der Entladungen bei für Anwendungsfälle relevanten Leistungsdichten ist geprägt durch das Entstehen von Einzelentladungen, den sogenannten Filamenten. Diese Filamente treten kurzzeitig und in großer Anzahl auf. Sie sind normalerweise über die gesamte Elektrodenfläche verteilt und besitzen sowohl lokal als auch zeitlich einen stochastischen Charakter.

Physikalisch läßt sich das Phänomen so beschreiben, dass mit zunehmender äußerer Spannung irgendwo im Entladungsbereich zu nicht vorhersehbaren Zeitpunkten Bedingungen vorliegen, die zu lokal begrenzten Entladungen führen. Durch die dielektrische Behinderung der Elektroden verlöschen diese Entladungen kurz nach ihrem Entstehen aufgrund der lokalen Gegenfelder (Spiegelladungen). Weitere, nachfolgende Einzelentladungen entstehen und verlöschen nach dem gleichen Prinzip.

Die an den äußeren Drahtgittern einer Siemens-Röhre sich befindenden Filamente sind relativ klein. Das Dielektrikum ist von der rückwartigen Elektrode und der äußeren, als Drahtgitter ausgebildeten Elektrode eingeschlossen. Bei der Entladung lassen sich die leuchtenden Filamente in direkter Umgebung der Drähte beobachten, die dem Dielektrikum zustreben. Die Länge dieser Filamente ist nur wenige 1/10mm lang.

Der Nachteil der mit Drahtnetzen arbeitenden Technik besteht ferner darin, daß die Drähte mit einem Mindestabstand, Maschenweite, zueinander angeordnet werden müssen. Werden die Maschen zu klein, behindern sich die Ladungen gegenseitig; überdies können Ozon und Sauerstoffionen nicht frei in die Umgebungsluft abtransportiert werden.

Ideal wäre demnach eine Struktur, welche praktisch flächig Filamente hervorbringen würde, welche dann in direktem Kontakt mit der Umgebungsluft stehen würden. Wünschenswert wäre dabei weiterhin, daß das elektrische Wechselfeld in den Raum hinein ragen würde, deshalb, weil bekannt ist, daß in einem schnellen elektrischen Wechselfeld insbesondere polare Moleküle dissoziiert werden.

Des Weiteren ist durch die DE-A-3424889 eine Elektrode für einen Gasentladungsreaktor bekannt geworden, welcher eine Metallschicht als Entladungselektrode aufweist, die mit einem keramischen Dielektrikum bedeckt ist. Das Dielektrikum weist an seiner der Metallschicht abgewandten Seite einen glasartigen Überzug auf, wobei die Dielektrizitätskonstante des Überzugs höher als diejenige des Dielektrikums ist. Gegenüber der Entladungselektrode ist eine Gegenelektrode angeordnet, wobei zwischen den beiden Elektroden das Prozeßgas hindurchströmt, welches durch die Plasmaentladung chernisch verändert werden soll. Der glasartige Überzug dient dazu, die mikrofeinen Poren in der Oberfläche des Dielektrikums auszufüllen und dem Dielektrikum eine glatte Aussenfläche zu verschaffen, weshalb der Überzug nur wenige Mikrometer stark ausgebildet ist.

### Technische Aufgabe:

Der Erfindung liegt die Aufgabe zugrunde, eine Vorrichtung der eingangs genannten Gattung zu schaffen, welche die vorgeschilderten Nachteile vermeidet und bei welcher insbesondere Ozon und Sauerstoff frei und unbehindert in die Umgebungsluft treten und mit ihr abtransportiert werden können.

### Offenbarung der Erfindung und deren Vorteile:

Die Lösung der Aufgabe ist bei einer Vorrichtung der eingangs genannten Gattung dadurch gekennzeichnet, dass
a) der Körper ein flacher, elektrisch isolierenden Träger (1,7) ist, dessen Material eine Dielektrizitätskonstante ε_{rTräger} von größer 50 (in Worten ε_{rTräger} > fünfzig) oder wenigstens größer 30 (in Worten ε_{rTräger} > dreißig) aufweist,
b) auf der einen Hauptoberfläche des Trägers (1,7), Rückseite, eine flächige Elektrode (4), untere Elektrode (4), aus einem elektrisch leitfähigen Material aufgebracht ist,
c) auf der anderen, der Luft ausgesetzten Hauptoberfläche des Trägers (1,7), Vorderseite, wenigstens eine bandförmige, elektrische Isolierschicht (2,8) aus einem dielektrischen Material aufgebracht ist, wobei die Isolierschicht (2,8) die Vorderseite des Trägers (1,7) nur teilweise bedeckt,
d) die Dielektrizitätskonstante des Trägers (1,7) und diejenige der Isolierschicht (2,8) unterschiedlich sind, wobei bei einer Dielektrizitätskonstante des Trägers (1,7) von ε_{rTräger}> fünfzig die Dielektrizitätskonstante der Isolierschicht (2,8) zwischen 50 > ε_{rIsoliersehicht} > 5 und bei einer Dielektrizitätskonstante des Trägers (1,7) von ε_{rTräger} > dreißig die Dielektrizitätskonstante der Isolierschicht (2,8) zwischen 30 > ε_{rIsolierschicht} > 5 beträgt, so dass sich der Effekt der Spiegelladungen einstellt,
e) auf der Isolierschicht (2,8) eine bandförmige Elektrode (3,10), obere Elektrode (3), aus einem elektrisch leitfähigen Material angeordnet ist, welche die Isolierschicht (2,8) nur teilweise bedeckt.

Der Vorteil der erfindungsgemäßen Vorrichtung besteht zum einen darin, dass Ozon und Sauerstoff frei und unbehindert in die Umgebungsluft austreten und mit ihr abtransportiert werden können. Zum anderen ist die Vorrichtung ist - im Gegensatz zu Vorrichtungen des Standes der Technik - klein und kann deshalb in eine Vielzahl von Kleingeräten, insbesondere auch mobilen Geräten, angewendet werden. Des Weiteren bringt die erfindungsgemäße Gestaltung der Isolierschicht sowie der darauf angeordneten Elektrode der Vorrichtung praktisch flächige Filamente hervor, welche in direktem Kontakt mit der Umgebungsluft stehen. In vorteilhafter Weise ragt das elektrische Wechselfeld in den Raum hinein, was deshalb der Fall ist, weil in einem schnellen elektrischen Wechselfeld insbesondere polare Moleküle dissoziiert werden.

Die Erfindung nutzt die Tatsache, daß unterschiedliche Materialien unterschiedliche Dielektrizitatskonstanten aufweisen. Werden diese Materialien erfindungsgemäß als flache, geschichtete Körper oder Strukturen eingesetzt, so sind neue, bisher nicht beobachtete Effekte die Folge.

Zur Erhöhung des Wirkungsgrades besteht die Isolierschicht in einer beispielhaften Ausführungsform der Erfindung vorteilhaft aus mehreren elektrisch isolierenden Teilschichten, deren Dielektrizitätskontanten mit wachsendem Abstand vom Träger abnehmen, so dass die oberste Teilschicht die kleinste Dielektrizitätskontante der Teilschichten aufweist, wobei die obere Elektrode auf der obersten Teilschicht angeordnet ist. Beim Aufbau von aufeinanderfolgenden Teilschichten stellen die unterschiedlichen Dielektrizitätskonstanten ebenfalls eine Bedingung dar, um den Effekt der Spiegelladung ausbilden zu können. Zusammengefasst soll aber im Nachfolgenden durch den Begriff der dielektrischen Barriere gemeint sein, dass die Isolierschicht entweder einstückig eine Schicht sein kann oder aus mehreren Teilschichten bestehen kann.

Diese erfindungsgemäße Lehre der doppelten dielektrischen Barriere, nämlich gebildet durch den Träger einerseits, zum Beispiel aus Keramik, Glas oder Polyamid als erstes Dielektrium und durch die darauf aufgetragene Isolierschicht andererseits als zweites Dielektrikum, welche vorzugsweise bandförmig ist und eine dünne, dielektrische Schicht aus zum Beispiel Glas, Keramik, Metalloxid, Polyamid, Thermoplasten, Duroplasten ist, arbeitet nach folgender physikalischer Gesetzmäßigkeit: Wird eine hohe elektrische Wechselspannung angelegt, kann sich das elektrische Feld - von der dünnen Schicht oder den Schichten fast unbehindert - zwischen den äußeren Elektroden aufbauen.

Wenn sich die Feldstärke der Zündspannung nähert, verhindert die schnell anwachsende Spiegelladung zwischen den Elektroden aufgrund der doppelten dielektrischen Barriere eine direkte, ständige Entladung durch die Dielektrika oder Schichten hindurch. Ein Ionenkanal in der Luft - die Dielektrizitätskonstante von Luft ist praktisch 1 - an der Oberfläche der dünnen dielektrischen Barriere entlang kann dagegen leicht gezündet werden, wodurch die auf der Oberfläche der Barriere gut zu beobachtenden zahlreichen Einzelfilamente erklärt werden.

Die mit ca. 2mm relativ langen Filamente verlaufen durch die Luft, ausgehend von der oberen, auf der Isolierschicht mittensymmetrisch bzw. mittig angeordneten oberen Elektrode auf der Oberfläche der Isolierschicht hin zum äußeren Rand derselben. Die Spiegelladung im Dielektrikum der Isolierschicht verhindert ein direktes Durchschlagen, während hingegen die niedrige Dielektrizitätszahl in der Luft die Entladung über die Luftstrecke, unmittelbar an der Oberfläche der Isolierschicht, wie Glasschicht, ermöglicht.

Wichtig für die Funktion der Vorrichtung als Ozon- und Ionengenerator ist die vorteilhaft große Fläche auf der Isolierschicht, die durch Filamente bedeckt wird, welche direkt der Umgebungsluft ausgesetzt sind.

Bei einem bevorzugten Beispiel einer Vorrichtung mit einer Dielektrizitätskonstante εᵣ des Trägers von wenigstens größer als 30 weist die Isolierschicht eine Dielektrizitätskonstante εᵣ zwischen unter 30 bis auf cirka 5 auf, wobei beim Vorhandensein mehrerer Isolierschichten deren Dielektrizitätskonstanten zwischen unter 30 bis ca. 5 abgestuft nach außen abnehmend gestaltet sind. Liegt die Dielektrizitätskonstante εᵣ des Trägers bei größer 50, so weist die Isolierschicht eine Dielektrizitätskonstante εᵣ zwischen unter 50 bis ca. 5 auf, wobei beim Vorhandensein mehrerer Isolierschichten wiederum deren Dielektrizitätskonstanten zwischen unter 50 bis ca. 5 nach außen hin abnehmend abgestuft sind.

Der Abstand bzw. die Differenz der Dielektrizitätskonstanten des Trägers und der Isolierschicht bzw. der Teilschichten muß so gewählt sein, dass sich der Effekt der Spiegelladungen einstellt.

Bei bevorzugten Beispielen bestehen Träger und Isolierschicht bzw. die Isolierschichten aus einem keramischen Material (Al₂O₃) oder Glas, zum Beispiel Polysilizium oder amorphes Silizium, oder einem organischen Kunststoff, zum Beispiel Polyamid, wobei die Isolierschicht gegebenenfalls auch aus einem oxidischen Material, zum Beispiel einem Metalloxid, wie Zinkoxid, bestehen kann.

Bei einem weiteren Ausführungsbeispiel ist die Dicke der Isolierschicht bzw. der Isolierschichten geringer als die Dicke des Trägers, wobei sich die Dicken vorzugsweise wie 1:4 bis 1:25 verhalten.

Um den Wirkungsgrad der Vorrichtung zu erhöhen, können erfindungsgemäß eine oder mehrere sehr dünne dielektrische Schichten, Teilschichten, auf der Isolierschicht aufgetragen sein, so dass diese aus einer Mehrzahl von Teilschichten besteht, wobei Bedingung ist, daß sich die Dielektrizitätskonstanten der Schichten unterscheiden, um den Effekt der sogenannten Spiegelladung ausbilden zu können. (Aus Gründen der einfacheren Lesbarkeit wird nachstehend aber nur von einer einzigen zusätzlichen dielektrischen Barriere gesprochen.)

Deshalb können als Isolierschicht oder -schichten auch vorzugsweise Folien aus organischen, elektrisch isolierenden Kunststoffen, zum Beispiel aus Polyamid oder Thermoplast oder Duroplast oder Acrylat oder Polymeren, eingesetzt werden, wobei bei der Verwendung von mehreren Folien deren Dielektrizitätskonstanten abgestuft sind.

Der Träger weist ein länglich-flächiges, vorzugsweise rechteckförmiges, Format auf, wobei als vorteilhafte Ausführungsform der Erfindung die auf dem Träger direkt angeordnete untere Elektrode die Rückseite des Trägers großflächig, vorzugsweise vollständig oder fast vollständig, bedeckt und mittig darauf angeordnet ist, wobei die auf der Vorderseite des Trägers befindliche Isolierschicht sowie die auf der Isolierschicht befindliche obere Elektrode sich längs der Längsachse des Trägers in Form jeweils eines Bandes mittig auf dem Träger bzw. auf der Isolierschicht erstrecken; dabei ist die Fläche der unteren Elektrode größer als die Fläche der Isolierschicht.

Beide Elektroden können als Gitter bzw. Netz ausgebildet sein, wobei die Fläche der unteren Elektrode größer ist als die Fläche der oberen Elektrode.

Ebenso können die Isolierschicht und die darauf angeordnete obere Elektrode mäanderförmig oder fingerförmig oder kammartig strukturiert auf dem Träger angeordnet sein, wobei die obere Elektrode auf der Isolierschicht mittensymmetrisch verläuft und ebenso die Fläche der unteren Elektrode größer ist als die Fläche der oberen Elektrode.

Wird eine hohe elektrische Wechselspannung, zum Beispiel 5kV mit einer Frequenz von ca. 30kHz, an die obere und die untere Elektrode angeschlossen, so kommt es zu einer fortlaufenden elektrischen Entladung des sich bildenden elektrischen Feldes, wobei Entladungskanäle sich in der Luft auf der Oberfläche des dielektrischen Isolierschicht von der oberen, vorzugsweise bandförmigen, Elektrode weg hin zum Rand der Isolierschicht bewegen. Die sich stets neu aufbauenden Entladungskanäle, Filamente, befinden sich in einem Abstand zueinander von ca. 0,1 mm, so daß sich bei Betrachtung in der Dunkelkammer ein quasi geschlossenenes Leuchtband zeigt, welches ausgehend von der mittensymetrisch bzw. mittig auf der Isolierschicht angeordneten oberen Elektrode die Oberfläche der Mäander oder Finger oder Zinken der, ebenfalls vorzugsweise bandförmigen, Isolierschicht bedeckt.

Bei diesem Aufbau kann das Problem entstehen, daß durch geometrische Toleranzen die Stromdichte in den Filamenten nicht gleich ist. Die relativ hohen Ströme in den Bereichen, in welchen die Luftstrecke der Entladung am kleinsten ist, belasten die Spannungsversorgung und können zu einer Verringerung der Spannung des Wechselspannungsgenerators führen. Das kann zur Folge haben, daß in den Bereichen, in welchen die Luftstrecke am längsten ist, die Entladungen nicht mehr möglich sind.

Aus diesem Grunde wird für ein weiteres bevorzugtes Beispiel der Erfindung vorgeschlagen, dass die Einspeisung der elektrischen Spannung des Wechselspannungsgenerators in die obere Elektrode über wenigstens einen elektrischen Widerstand erfolgt, wobei bei der mäanderförmigen oder fingerförmigen oder kammartigen Gestaltung der obere Elektrode an jedem Mäander oder Finger oder Zinken der oberen Elektrode ein solcher Widerstand als Einspeisepunkt vorhanden ist. Käme es in einem der Zweige zu einer ungewöhnlich hohen Aktivität der Filamente, bräche die Spannung in diesem Zweig über dem Speisewiderstand zusammen. Ergebnismäßig wird deshalb durch die Einkopplung der Spannung über die Widerstände eine gleichmäßigere Entladungstätigkeit erreicht.

Aus den gleichen Gründen ist es betreffend ein weiteres Ausführungsbeispiel vorteilhaft, dass die obere Elektrode aus einem Material mit herabgesetzter elektrischer Leitfähigkeit besteht, nämlich aus einem elektrisch halbleitenden Material gebildet ist.

Vorteilhaft kann deshalb in weiteren Ausführungsbeispielen die obere Elektrode aus einem der folgenden Materialien bestehen: entweder aus Graphit, Kohle oder aus halbleitenden, dotierten oder undotierten Metalloxiden, wie Zinkoxid, Zinndioxid, Wolframtrioxid, Eisenoxid.

Um den Effekt der Erzeugung der Filamente noch zu erhöhen, wird in weiteren Ausführungsbeispielen erfindungsgemäß die obere Elektrode aus einem Material mit möglichst beweglichen Elektronen gewählt, um die Austrittsarbeit der Elektronen zu unterstützen bzw. zu verringern. Derartige Materialien mit niedrigen Elektrodenaustrittsarbeiten, welche verwendet werden können, sind zum Beispiel Bariumtitanat, Barium-, Zirkonium-Titanat, Barium-Gallium-Titanat oder halbleitende, dotierte Metalloxide, wie Zinkoxid, Zinndioxid, Wolframtrioxid, Eisenoxid.

Der auch diesem Material eigentümliche erhöhte elektrische Widerstand führt ebenfalls zu einer natürlichen Begrenzung der Ströme in den einzelnen Mäandern oder Fingern oder Zinken der entsprechenden Struktur der Isolierschicht und der oberen Elektrode mit dem Ergebnis einer Vergleichmäßigung der Filamente über der Fläche.

Die obere Elektrode kann auch aus einem metallischen elektrisch leitenden Material bestehen. Des Weiteren kann die untere Elektrode, welche zum Beispiel aus aufgedampften Platin besteht, nach außen mit einer sehr dünnen Glasschicht isoliert und passiviert sein, oder die untere Elektrode kann galvanisch aufgebracht sein.

Die Flächenverhältnisse von oberer Elektrode zu Isolierschicht zu Träger können sich ungefähr wie 1:4:8 verhalten. Dabei weisen die obere Elektrode und die Isolierschicht eine bandförmige Struktur auf und sind jeweils geometrisch mittig oder mittig-symmetrisch aufeinander angeordnet.

Um eine möglichst große Fläche der Isolierschicht mit Filamenten zu bedekken, wird in einem weiteren Ausführungsbeispiel erfindungsgemäß vorgeschlagen, dass jeweils zwei derartige Vorrichtungen mit den rückwärtigen unteren Elektroden aufeinander und den Isolierschichten dazwischen liegend zu einer Flachbaugruppe zusammengefügt sind, so dass die Elektroden sich jeweils auf der Außenseite befinden. Damit wird erreicht, daß ein einziges, kompaktes und flaches Bauteil, nämlich Flachbaugruppe, auf beiden Seiten eine möglichst hohe aktive Fläche für die zu erzeugenden Filamente aufweist.

Eine derartige Vorrichtung zur Erzeugung eines Plasmas zur Herstellung von Ozon und und/oder Sauerstoffionen in Luft, nach dem Prinzip der dielektrisch behinderten Entladung, mit zwei Elektroden, an welche eine Hochspannung eines Wechselspannungsgenerators gelegt ist und zwischen welchen ein elektrisch isolierender Körper angeordnet ist, ist dadurch gekennzeichnet, dass
a) der Körper aus zwei flachen, elektrisch isolierenden Trägern besteht, deren Material je eine Dielektrizitätskonstante ε_{rTräger} von größer 50 (in Worten ε_{rTräger} > fünfzig) oder wenigstens größer 30 (in Worten ε_{rTräger} > dreißig) aufweist, und welche mit je einer ihrer Hauptoberflächen, Rückseite, aufeinander liegend zusammengefügt sind und sich dazwischen eine gemeinsame flächige Elektrode aus einem elektrisch leitfähigen Material befindet,
b) auf den anderen, der Luft ausgesetzten Hauptoberflächen der Träger wenigstens eine bandförmige, elektrische Isolierschicht aus einem dielektrischen Material aufgebracht ist, wobei die Isolierschicht die Vorderseite der Träger nur teilweise bedeckt,
c) die Dielektrizitätskonstante der Träger und diejenige der Isolierschichten unterschiedlich sind, wobei bei einer Dielektrizitätskonstante der Träger von je ε_{rTräger}>fünfzig die Dielektrizitätskonstante der Isolierschichten zwischen je 50>ε_{rIsolierschicht}>5 und bei einer Dielektrizitätskonstante der Träger von je ε_{rTräger} >dreißig die Dielektrizitätskonstante der Isolierschichten zwischen 30> ε_{rIsolierschicht}>5 beträgt, so dass sich der Effekt der Spiegelladungen einstellt,
d) auf jeder der Isolierschichten je eine bandförmige Elektrode aus einem elektrisch leitfähigen Material angeordnet ist, welche jeweils die Isolierschichten nur teilweise bedeckt.
e) so dass die beiden Träger mit der dazwischen liegenden gemeinsamen Elektrode und den Isolierschichten mit den oberen Elektroden zu einer Flachbaugruppe zusammengefügt sind.

Es ist für die Funktion dieser Anordnung unerheblich, ob die innere Elektrode sich auf jeder Substratschicht befindet und diese Substratschichten aneinandergeklebt oder gekittet werden, oder ob sich nur eine einzige Elektrode im Inneren einer sogenannten Sandwich-Struktur befindet. Deshalb kann die Flachbaugruppe vorteilhaft sandwichartig mit nur einer einzigen inneren Elektrode, welche die untere Elektrode repräsentiert, aufgebaut sein.

Ein weiterer Vorteil dieser Ausgestaltung der Flachbaugruppe besteht darin, dass die von außen berührbaren äußeren oberen Elektroden der Flachbaugruppe elektrisch geerdet bzw. auf Masse gelegt werden können, so daß nur die inneren, elektrisch isolierten Elektroden, welche gemäß des erfindungsgemäßen Aufbaus die untere Elektrode repräsentieren, gegenüber dem Nullpotential (Erde/Masse) Spannung führen, was sowohl leichter zu handhaben als auch elektrisch sicherer ist.

Wird für den Träger ein flexibles dielektrisches Trägermaterial, z.B. ein Polyamid, welches dazu glasfaserverstärkt sein kann, eingesetzt, kann eine bandförmige Vorrichtung bzw. Flachbaugruppe ausgeformt werden, welche in geeigneter Form gefaltet oder aufgerollt werden kann, so daß eine sehr große aktive Fläche für die Filamente entsteht, an der die Luft sehr eng vorbeigeführt werden kann. Somit kann der bzw. können die Träger aus einem flexiblen dielektrischen Trägermaterial besteht bzw. bestehen zu Bildung einer bandförmigen, rollfähigen Vorrichtung bzw. Flachbaugruppe.

Die geometrische Anordnung der Elektroden kann in weiten Bereichen frei ausgeformt sein. Zum Beispiel kann die Elektrodenstruktur der beiden Elektroden beliebig auf dem Träger angeordnet sein. Gemeinsam ist allen Ausführungsformen, daß sich auf einem Träger aus geeignetem dielektrischem Material eine rückwärtige oder untere Elektrode befindet, wobei auf der gegenüberliegenden, der Luft ausgesetzten Hauptoberfläche des Trägers sich, vorzugsweise bandförmige, Strukturen aus dünnen Schichten einer oder mehrerer aufeinanderliegender dielektrischen Isolierschichten befinden, in deren geometrischer Mitte sich elektrisch leitende, vorzugsweise ebenfalls bandförmige, Strukturen als Elektrode bzw. Elektroden befinden, wobei die Dielektrizitätskontanten von Träger und Isolierschicht unterschiedlich sind.

### Kurzbeschreibung der Zeichnung, in der zeigen:

- Figur 1: eine perspektive Darstellung einer länglich-flächigen erfindungsgemäßen Vorrichtung gemäß einer bevorzugten Ausführungsform
- Figur 2: eine Draufsicht auf eine weitere bevorzugte Ausführung einer Vorrichtung, bei der die Isolierschicht und die obere Elektrode kammartig gestaltet sind
- Figur 3: eine Flachbaugruppe, die aus zwei der Vorrichtungen von Figur 1 zusammengesetzt ist, und
- Figur 4: eine Draufsicht auf ein weiteres Ausführungsbeispiel, welches als Spirale aus flexiblen Materialien gewunden ist.

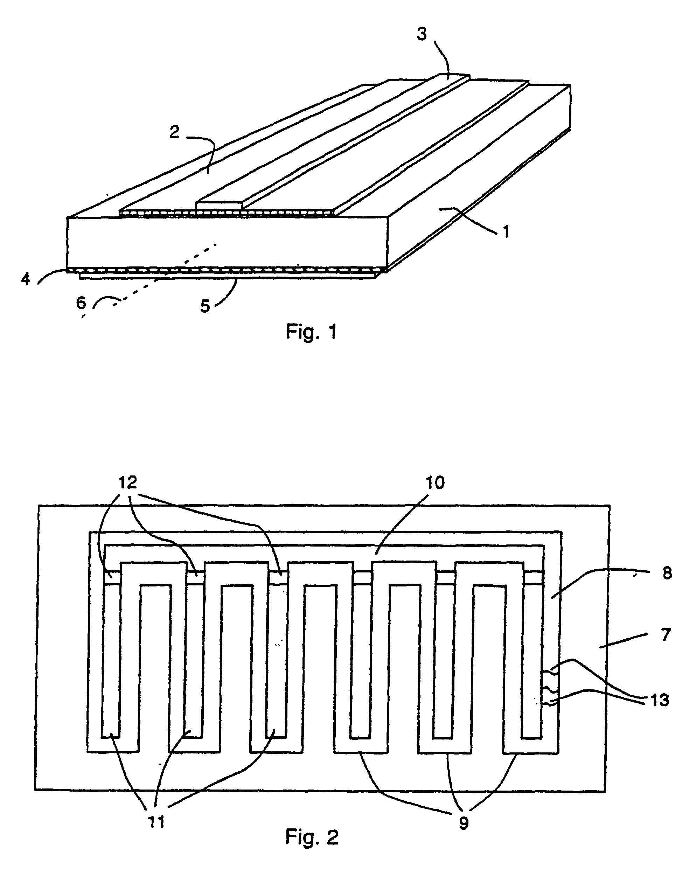

Figur 1 zeigt in einer perspektiven Darstellung eine planare, länglich-flächige Vorrichtung, bestehend aus einem quaderförmigen Träger 1 als Dielektrikum, beispielsweise aus einem keramischen Material; Keramik besitzt eine sehr hohe Dielektrizitatskonstante von zum Beispiel εᵣ > 50.....100. Der Träger ist ca. 0,7mm bis 1mm dick und kann ca. 20 bis 100 mm breit sein.

Auf der Unterseite des Trägers 1 ist eine flächige Elektrode 4, die untere Elektrode, aus zum Beispiel Platin aufgedampft, welche nach außen hin durch eine sehr dünne Glasschicht 5 isoliert und passiviert ist.

Auf der Oberseite des Trägers 1 ist eine dünne, bandförmige Isolierschicht 2 aus einem weiteren Dielektrikum angeordnet, welche zum Beispiel aus Glas, Polysilizium, amorphem Silizium oder aus Metalloxiden, z.B. Zinkoxid, besteht und welche vorzugsweise ca 0,05 mm bis 0,5 mm dick ist. Die Isolierschicht 2, deren Fläche kleiner ist als diejenige der auf der gegenüberliegenden Hauptoberfläche befindliche unteren Elektrode 5, ist bevorzugt geometrisch mittig bzw. mittig-symmetrisch auf dem Träger 1 angeordnet.

Auf der Isolierschicht 2 ist eine obere Elektrode 3 angeordnet, welche bezüglich ihrer Fläche kleiner ist als die Fläche der Isolierschicht; die obere Elektrode 3 ist ebenfalls mittig bzw. mittensymmetrisch auf der Isolierschicht 2 angeordnet. Vorzugsweise kann mit den vorstehend angegebenen Maßen die obere Elektrode 3 zwischen 1 mm bis 5 mm breit sein. Die obere Elektrode 3 ist somit ebenfalls bandförmig und besteht aus einer elektrisch leitfähigen Substanz, z.B. aus Metall. Die Isolierschicht 2 hat eine Dielektrizitatskonstante εᵣ von etwa 5-30 und ist so gewählt, dass sich die Dielektrizitatskonstanten von Träger 1 und Isolierschicht 2 deutlich unterscheiden. Mit der Bezugsziffer 6 ist die Längsachse der Vorrichtung angedeutet.

Figur 2 zeigt eine andere bevorzugte Ausführungsform der erfindungsgemäßen Vorrichtung, bestehend aus einem Träger 7 mit einer (unterhalb der Zeichenebene angeordneten und nicht sichtbaren) unteren Elektrode auf der unteren Hauptoberfläche. Auf der gegenüberliegenden oberen Hauptoberfläche des Trägers 7 ist eine mäanderformige Beschichtung aus einem Dielektrikum als Isolierschicht 8 aufgebracht, welche vorzugsweise eine Dicke zwischen ca. 0,1 mm bis 0,2 mm besitzt. Die Struktur dieser Isolierschicht 8 ist hier kammartig mit einzelnen Zinken 9 gewählt, welche voneinander äquidistante Abstände haben. Die Isolierschicht 8 ist bezüglich ihres einhüllenden Rechteckes mittig auf dem Träger 7 angeordnet.

Auf der Isolierschicht 8 befindet sich mittig bzw. mittensymetrisch zu derselben eine elektrisch leitende obere Elektrode 10, welche entsprechend der kammartigen Struktur der Isolierschicht 8 gestaltet ist, wobei sich auch die Elektrode 10 bevorzugt mittig bzw. mittensymmetrisch auf der Isolierschicht 8 befindet und damit Elektrodenarme 11 ausbildet. Die Fläche der gesamten oberen Elektrode 10 ist kleiner als die Fläche der Isolierschicht 8. Vorzugsweise können bei den gegebenen Maßen die Zinken 9 der Isolierschicht 8 eine Breite von ca. 4-6 mm aufweisen, wobei dann die Elektrodenarme 11 auf den Zinken 9 zwischen 0,5 bis 2 mm breit sein können.

Die untere Elektrode (in Figur 2 verdeckt) kann die untere Hauptoberfläche des Trägers 7 voll ausfüllen oder aber ebenfalls als Mäander ausgebildet sein, welche aber eine größere Breite haben müssen als die durch das zweite Dielektrium der Isolierschicht 8 gebildeten Mäander 9 bzw. Zinken 9. Die Gitterstruktur erlaubt den nahezu unbehinderten Aufbau eines elektrischen Feldes.

Bevorzugt besteht die untere Elektrode aus einer dünnen Metallschicht, welche aufgedampft wird oder galvanisch aufgebracht ist. Um die elektrischen Kapazitäten zwischen der unteren und der oberen Elektrode 10 so klein wie möglich zu halten, kann auch die untere Elektrode als Netz- bzw. Gitterstruktur ausgebildet sein. Allerdings wird dadurch die elektrische Kapazität etwas herabgesetzt.

Die Einspeisung der Spannung eines (nicht gezeigten) Wechselspannungsgenerators in die obere Elektrode 10 erfolgt über hochohmige Widerstände 12, Ankopplungswiderstände, von denen sich jeweils ein Widerstand 12 jeweils am Beginn eines Elektrodenarms 11 der oberen Elektrode 10 befindet, wie es der Figur 2 zu entnehmen ist. Käme es in einem Zweig bzw. Elektrodenarm 11 zu einer ungewöhnlich hohen Aktivität der Filamente, bräche die Spannung in diesem Zweig über dem zugehörigen Widerstand 12 zusammen. Durch die Einkopplung der Spannung über eine Mehrzahl von Widerständen 12 wird eine gleichmäßige Entladungstätigkeit erreicht.

Wird eine hohe elektrische Wechselspannung von z.B. 5KV bei ca. 30kHz an die obere und die untere Elektrode angeschlossen, kommt es zu einer fortlaufenden elektrischen Entladung des sich bildenden elektrischen Feldes, wobei sich Entladungskanäle 13 von der oberen Elektrode 10 ausgehend über die Isolierschicht 8 verlaufend ausbilden und sich in der Luft auf der Oberfläche der Isolierschicht 8 von der oberen Elektrode 10 weg hin zum Rand der Isolierschicht 8 bewegen. Die sich stets neu aufbauenden Entladungskanäle 13, Filamente, befinden sich bevorzugt in einem Abstand zueinander von ca. 0,1 mm, so daß sich bei Betrachtung in der Dunkelkammer ein quasi geschlossenenes Leuchtband zeigt, welches, ausgehend von der mittig auf der Isolierschicht 8 angeordneten oberen bandförmigen Elektrode 10, die freie Oberfläche der Mäander 9 bzw. der Zinken 9 der Isolierschicht 8 bedeckt.

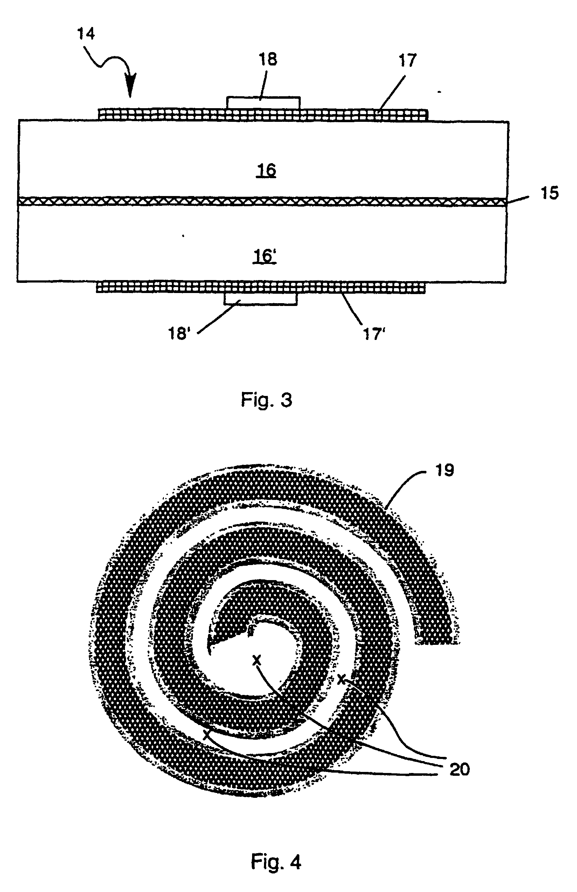

Figur 3 zeigt eine Ansicht einer Flachbaugruppe 14, die aus jeweils zwei erfindungsgemäßen Vorrichtungen entsprechend der Figur 1, die mit den dort mit der Bezugsziffer 4 bezeichneten rückwärtigen unteren Elektroden aufeinander gelegt sind und dadurch eine nunmehr dazwischen liegende Elektrode 15 bilden sowie Trägern 16, 16' sowie Isolierschichten 17, 17' dazwischen liegend zusammengefügt ist, entsprechend dem Träger 1 und der Isolierschicht 2 in Figur 1. Obere Elektroden 18, 18' befinden sich jeweils auf der Außenseite der Flachbaugruppe 14, die somit sandwichartig mit nur einer einzigen inneren Elektrode 15, welche die untere Elektrode repräsentiert, aufgebaut ist. Die von außen berührbaren äußeren oberen Elektroden 18, 18' der Flachbaugruppe 14 sind elektrisch geerdet bzw. auf Masse gelegt.

Figur 4 zeigt in einer Draufsicht ein weiteres Ausführungsbeispiel der erfindungsgemäßen Vorrichtung, welche als Spirale 19 aus flexiblen Materialien gewunden ist. Der bzw. die Träger sowie die Isolierschicht bzw. -schichten bestehen aus flexiblen dielektrischen Trägermaterialen zur Bildung einer bandförmigen, rollfähigen spiralförmigen Vorrichtung bzw. Flachbaugruppe. Durch die Spirale 19 hindurch kann Luft hindurchströmen (in die Zeichenebene), was durch Kreuze 20 gekennzeichnet ist.

### Gewerbliche Anwendbarkeit:

Der Gegenstand der Erfindung ist überall dort gewerblich anwendbar, wo Ozon und/oder Sauerstoffionen in Luft erzeugt werden sollen, insbesondere zur Verbesserung und Sterilisation der Atemluft aufgrund stark ausgeprägter Crack-Eigenschaften gegenüber auch großen Molekülen. Die erfindungsgemäße Vorrichtung ist planar und besitzt kleine geometrische Abmessungen, jedoch eine erheblich vergrößerte luftberührende Plasmaoberfläche, was die Ionen- und Ozonproduktion massiv erhöht. Ebenso besitzt die Vorrichtung einen geringen Strömungswiderstand für den Abtransport des Ozons in der Luft, günstige Herstellungsskosten und einen hohen Wirkungsgrad. Ebenso lassen sich die Strukturen der Isolierschicht sowie der oberen Elektrode in engen Grenzen herstellen, wodurch auch die Lebensdauer verbessert wird.

## Patentansprüche

1. Vorrichtung zur Erzeugung eines Plasmas zur Herstellung von Ozon und und/oder Sauerstoffionen in Luft, nach dem Prinzip der dielektrisch behinderten Entladung, mit zwei Elektroden (3,4), an welche eine Hochspannung eines Wechselspannungsgenerators gelegt ist und zwischen welchen ein elektrisch isolierender Körper (1,7) angeordnet ist, **dadurch gekennzeichnet, dass**
a) der Körper ein flacher, elektrisch isolierenden Träger (1,7) ist, dessen Material eine Dielektrizitätskonstante ε_{rTräger} von größer 50 (in Worten ε_{rTräger} > fünfzig) oder wenigstens größer 30 (in Worten ε_{rTräger} > dreißig) aufweist,
b) auf der einen Hauptoberfläche des Trägers (1,7), Rückseite, eine flächige Elektrode (4), untere Elektrode (4), aus einem elektrisch leitfähigen Material aufgebracht ist,
c) auf der anderen, der Luft ausgesetzten Hauptoberfläche des Trägers (1,7), Vorderseite, wenigstens eine bandförmige, elektrische Isolierschicht (2,8) aus einem dielektrischen Material aufgebracht ist, wobei die Isolierschicht (2,8) die Vorderseite des Trägers (1,7) nur teilweise bedeckt,
d) die Dielektrizitätskonstante des Trägers (1,7) und diejenige der Isolierschicht (2,8) unterschiedlich sind, wobei bei einer Dielektrizitätskonstante des Trägers (1,7) von ε_{rTräger} > fünfzig die Dielektrizitätskonstante der Isolierschicht (2,8) zwischen 50 > ε_{rIsolierschicht} > 5 und bei einer Dielektrizitätskonstante des Trägers (1,7) von ε_{rTräger} > dreißig die Dielektrizitätskonstante der Isolierschicht (2,8) zwischen 30 > ε_{rIsolierschicht} > 5 beträgt, so dass sich der Effekt der Spiegelladungen einstellt,
e) auf der Isolierschicht (2,8) eine bandförmige Elektrode (3,10), obere Elektrode (3), aus einem elektrisch leitfähigen Material angeordnet ist, welche die Isolierschicht (2,8) nur teilweise bedeckt.

2. Vorrichtung nach Anspruch 1, **dadurch gekennzeichnet,**
**dass** die Isolierschicht (2,8) aus mehreren elektrisch isolierenden Teilschichten besteht, deren Dielektrizitätskontanten mit wachsendem Abstand vom Träger (1,7) abnehmen, so dass die oberste Teilschicht die kleinste Dielektrizitätskontante der Teilschichten aufweist, wobei die obere Elektrode (3,10) auf der obersten der Teilschichten angeordnet ist.

3. Vorrichtung nach Anspruch 1 oder 2, **dadurch gekennzeichnet,**
**dass** bei einer Dielektrizitätskonstante ε_{rTräger} von wenigstens größer als 30 des Trägers (1,7) und beim Vorhandensein mehrerer Isolierschichten (2,8) deren Dielektrizitätskonstanten ε_{rIsolierschichten} zwischen 5 bis unter 30 abgestuft sind.

4. Vorrichtung nach Anspruch 1, **dadurch gekennzeichnet,**
**dass** der Träger (1,7) und die Isolierschicht (2,8) bzw. die Isolierschichten aus einem keramischen Material (Al₂O₃) oder Glas, zum Beispiel Polysilizium oder amorphes Silizium, oder einem organischen Kunststoff, zum Beispiel Polyamid, bestehen, wobei die Isolierschicht (2,8) gegebenenfalls auch aus einem oxidischen Material, zum Beispiel einem Metalloxid, wie Zinkoxid, besteht.

5. Vorrichtung nach Anspruch 1, **dadurch gekennzeichnet,**
**dass** die Dicke der Isolierschicht (2,8) bzw. der Isolierschichten (2,8) geringer ist als die Dicke des Trägers (1,7), wobei sich die Dicken vorzugsweise wie 1:4 bis 1:25 verhalten.

6. Vorrichtung nach Anspruch 1, **dadurch gekennzeichnet,**
**dass** die Isolierschicht (2,8) oder -schichten Folien aus organischen, elektrisch isolierenden Kunststoffen sind, zum Beispiel aus Polyamid oder Thermoplast oder Duroplast oder Acrylat oder Polymeren bestehen, wobei bei der Verwendung von mehreren Folien deren Dielektrizitätskonstanten abgestuft sind.

7. Vorrichtung nach Anspruch 1, **dadurch gekennzeichnet,**
**dass** der Träger (1,7) ein länglich-flächiges, vorzugsweise rechteckformiges, Format aufweist, wobei die auf dem Träger (1,7) direkt angeordnete untere Elektrode (4) die Rückseite des Trägers (1,7) großflächig, vorzugsweise vollständig oder fast vollständig, bedeckt und geometrisch mittig darauf angeordnet ist und dass die auf der Vorderseite des Trägers (1,7) befindliche Isolierschicht (2,8) sowie die auf derselben befindliche obere Elektrode (3,10) sich längs der Längsachse (6) des Trägers (1,7) in Form jeweils eines Bandes geometrisch mittig auf dem Träger bzw. auf der Isolierschicht erstrecken, wobei die Fläche der unteren Elektrode größer ist als die Fläche der Isolierschicht.

8. Vorrichtung nach Anspruch 1, **dadurch gekennzeichnet,**
**dass** beide Elektroden (3,4,10) als Gitter bzw. Netz ausgebildet sind, wobei die Fläche der unteren Elektrode (4) größer ist als die Fläche der oberen Elektrode (3,10).

9. Vorrichtung nach Anspruch 1, **dadurch gekennzeichnet,**
**dass** die Isolierschicht (2,8) und die darauf angeordnete obere Elektrode (3,10) mäanderförmig oder fingerförmig oder kammartig strukturiert geometrisch mittig auf dem Träger (1,7) angeordnet sind, wobei die obere Elektrode (3,10) auf der Isolierschicht (2,8) ebenfalls geometrisch mittig verläuft.

10. Vorrichtung nach Anspruch 9, **dadurch gekennzeichnet,**
**dass** die Einspeisung der elektrischen Spannung des Wechselspannungsgenerators in die obere Elektrode (3,10) über einen elektrischen Widerstand (12) erfolgt, wobei bei der mäanderförmigen oder fingerförmigen oder kammartigen Gestaltung der obere Elektrode (3,10) an jedem Mäander oder Finger oder Zinken (11) ein solcher Widerstand (12) als Einspeisepunkt vorhanden ist.

11. Vorrichtung nach Anspruch 1, **dadurch gekennzeichnet,**
**dass** die obere Elektrode (3,10) aus einem metallischen elektrisch leitenden oder aus einem elektrisch halbleitenden Material besteht.

12. Vorrichtung nach Anspruch 11, **dadurch gekennzeichnet,**
**dass** die obere Elektrode (3,10) aus einem der folgenden Materialien besteht:
entweder Graphit, Kohle
oder elektrisch leitfähige Metalllegierungen mit niedrigeren Elektrodenaustrittsarbeiten, wie Bariumtitanat, Barium-, Zirkonium-Titanat, Barium-Gallium-Titanat
oder halbleitende, dotierte Metalloxide, wie Zinkoxid, Zinndioxid, Wolframtrioxid, Eisenoxid.

13. Vorrichtung nach Anspruch 1, **dadurch gekennzeichnet,**
**dass** die untere Elektrode (4), welche zum Beispiel aus aufgedampften Platin besteht oder galvanisch aufgebracht ist, nach außen hin mit einer sehr dünnen Glasschicht (5) isoliert und passiviert ist.

14. Vorrichtung nach Anspruch 1, **dadurch gekennzeichnet,**
**dass** sich die Flächenverhältnisse von oberer Elektrode (3,10) zu Isolierschicht (2,8) zu Träger (1,7) ungefähr wie 1:4:8 verhalten.

15. Vorrichtung zur Erzeugung eines Plasmas zur Herstellung von Ozon und und/oder Sauerstoffionen in Luft, nach dem Prinzip der dielektrisch behinderten Entladung, mit zwei Elektroden (18,18',15), an welche eine Hochspannung eines Wechselspannungsgenerators gelegt ist und zwischen welchen ein elektrisch isolierender Körper (16,16') angeordnet ist,
**dadurch gekennzeichnet, dass**
a) der Körper aus zwei flachen, elektrisch isolierenden Trägern (16,16') besteht, deren Material je eine Dielektrizitätskonstante ε_{rTräger} von größer 50 (in Worten ε_{rTräger} > fünfzig) oder wenigstens größer 30 (in Worten ε_{rTräger} > dreißig) aufweist, und welche mit je einer ihrer Hauptoberflächen, Rückseite, aufeinander liegend zusammengefügt sind und sich dazwischen eine gemeinsame flächige Elektrode (15) aus einem elektrisch leitfähigen Material befindet,
b) auf den anderen, der Luft ausgesetzten Hauptoberflächen der Träger (16,16') wenigstens eine bandförmige, elektrische Isolierschicht (17,17') aus einem dielektrischen Material aufgebracht ist, wobei die Isolierschicht (17,17') die Vorderseite der Träger (16,16') nur teilweise bedeckt,
c) die Dielektrizitätskonstante der Träger (16,16') und diejenige der Isolierschichten (17,17') unterschiedlich sind, wobei bei einer Dielektrizitätskonstante der Träger (16,16') von je ε_{rTräger} > fünfzig die Dielektrizitätskonstante der Isolierschichten (17,17') zwischen je 50 > ε_{rIsolierschicht} > 5 und bei einer Dielektrizitätskonstante der Träger (16,16') von je ε_{rTräger} > dreißig die Dielektrizitätskonstante der Isolierschichten (17,17') zwischen 30 > ε_{rIsolierschicht} > 5 beträgt, so dass sich der Effekt der Spiegelladungen einstellt,
d) auf jeder der Isolierschichten (17,17') je eine bandförmige Elektrode (18,18') aus einem elektrisch leitfähigen Material angeordnet ist, welche jeweils die Isolierschichten (17,17') nur teilweise bedeckt.
e) so dass die beiden Träger (16, 16') mit der dazwischen liegenden gemeinsamen Elektrode (15) und den Isolierschichten (17, 17') mit den oberen Elektroden (18, 18') zu einer Flachbaugruppe (14) zusammengefügt sind.

16. Vorrichtung nach Anspruch 16, **dadurch gekennzeichnet,**
**dass** die von außen berührbaren äußeren oberen Elektroden (18,18') der Flachbaugruppe (14) elektrisch geerdet bzw. auf Masse gelegt sind.

17. Vorrichtung nach Anspruch 1 oder 15, **dadurch gekennzeichnet,**
**dass** der bzw. die Träger aus einem flexiblen dielektrischen Trägermaterial besteht bzw. bestehen zur Bildung einer bandförmigen, rollfähigen oder spiralförmigen Vorrichtung (19) bzw. Flachbaugruppe (19).

## Claims

1. A device to generate a plasma for the production of ozone and/or oxygen ions in the air, based on the principle of dielectrically impeded discharge, with two electrodes (3, 4) to which a high voltage from an alternating voltage generator is applied and between which an electrically insulating element (1, 7) is situated,
**characterized in that**
a) the element consists of a flat, electrically insulating carrier (1, 7), whose material has a dielectric constant εᵣ·_{carrier} which is greater than 50 (in words, ε_{r·carrier}°> fifty) or at least greater than 30 (in words, ε_{r·carrier} > thirty),
b) a flat electrode (4), lower electrode (4), made of an electrically conductive material, is applied onto one of the main surfaces of the carrier (1, 7), the rear,
c) at least one electric insulating layer (2, 8) made of a dielectric material is applied onto the other main surface of the carrier (1, 7), the front, which is exposed to the air, whereby the insulating layer (2, 8) only partially covers the front of the carrier (1, 7),
d) the dielectric constant of the carrier (1,7) and that of the insulating layer (2, 8) are different, whereby, at a dielectric constant of the carrier (1, 7) of εᵣ·_{carrier}·> fifty, the dielectric constant of the insulating layer (2, 8) is between 50°> εᵣ·_{insulating layer}·> 5 and, at a dielectric constant of the carrier (1, 7) of εᵣ·_{carrier}·> thirty, the dielectric constant of the insulating layer (2, 8) is between 30°> εᵣ·_{insulating layer}·> 5, so that the mirror discharge effect occurs,
e) a band-shaped electrode (3, 10), upper electrode (3), made of an electrically conductive material that only partially covers the insulating layer (2, 8), is situated on the insulating layer (2, 8).

2. The device according to Claim 1, **characterized in that**
the insulating layer (2, 8) consists of several electrically insulating partial layers whose dielectric constants decrease as the distance from the carrier (1, 7). increases, so that the top partial layer has the smallest dielectric constant of the partial layers, whereby the upper electrode (3, 10) is arranged on the top partial layer.

3. The device according to Claim 1 or 2, **characterized in that**,
at a dielectric constant εᵣ·_{carrier} of the carrier (1, 7) that is at least greater than 30 and with the presence of several insulating layers (2, 8), their dielectric constants εᵣ·_{insulating layers} are graduated between 5 and less than 30.

4. The device according to Claim 1, **characterized in that**
the carrier (1, 7) and the insulating layer (2, 8) or the insulating layers are made of a ceramic material (Al₂O₃) or glass, for example, polysilicon or amorphous silicon, or of an organic plastic, for example, polyamide, whereby the insulating layer (2, 8) can optionally also be made of an oxidic material, for example, metal oxide such as zinc oxide.

5. The device according to Claim 1, **characterized in that**
the thickness of the insulating layer (2, 8) or of the insulating layers (2, 8) is less than the thickness of the carrier (1, 7), whereby the thicknesses are preferably in a ratio of 1:4 to 1:25.

6. The device according to Claim 1, **characterized in that**
the insulating layer (2, 8) or insulating layers consist of films made of organic, electrically insulating plastics, for example, made of polyamide or of thermoplastic or thermoset plastic or acrylate or polymers, whereby, when several films are employed, their dielectric constants are graduated.

7. The device according to Claim 1, **characterized in that**
the carrier (1, 7) has an elongated-flat, preferably rectangular format, whereby the lower electrode (4) that is situated directly on the carrier (1, 7) covers the rear of the carrier (1, 7) over a large surface area, preferably completely or almost completely, and is situated geometrically centered on said carrier, and **in that** the insulating layer (2, 8) located on the front of the carrier (1, 7) as well as the upper electrode (3, 10) located on the insulating layer (2, 8) extend along the longitudinal axis (6) of the carrier (1, 7), each in the form of a band geometrically centered on the carrier or on the insulating layer, whereby the surface area of the lower electrode is larger than the surface area of the insulating layer.

8. The device according to Claim 1, **characterized in that**
both electrodes (3, 4, 10) are designed as grids or nets, whereby the surface area of the lower electrode (4) is larger than the surface area of the upper electrode (3, 10).

9. The device according to Claim 1, **characterized in that**
the insulating layer (2, 8) and the upper electrode (3, 10) situated on it, which are structured in a meander-shaped or finger-shaped or comb-like way, can be situated geometrically centered on the carrier (1, 7), whereby the upper electrode (3, 10) likewise runs geometrically centered on the insulating layer (2, 8).

10. The device according to Claim 9, **characterized in that**
the voltage from an alternating voltage generator is fed into the upper electrode (3, 10) via an electric resistor (12), whereby, with the meander-shaped or finger-shaped or comb-like design of the upper electrode (3, 10), such a resistor (12) is present at each meander or finger or tooth (11) as the supply point.

11. The device according to Claim 1, **characterized in that**
the upper electrode (3, 10) is made of a metallic electrically conductive material or of an electrically semi-conductive material.

12. The device according to Claim 11, **characterized in that**
the upper electrode (3, 10) is made of one of the following materials: either of graphite, charcoal
or electrically conductive metal alloys with low electrode work functions, such as barium titanate, barium-zirconium titanate, barium-gallium titanate
or semi-conductive, doped metal oxides such as zinc oxide, tin dioxide, tungsten trioxide, iron oxide.

13. The device according to Claim 1, **characterized in that**
the lower electrode (4) which consists, for example, of vapor-deposited platinum, is insulated and passivated towards the outside with a very thin layer of glass (5).

14. The device according to Claim 1, **characterized in that**
the surface area ratios of the upper electrode (3, 10) to the insulating layer (2, 8) to the carrier (1,7) can be approximately 1:4:8.

15. The device to generate a plasma for the production of ozone and/or oxygen ions in the air, based on the principle of dielectrically impeded discharge, with two electrodes (18, 18', 15) to which a high voltage from an alternating voltage generator is applied and between which an electrically insulating element (16, 16') is situated, **characterized in that**
a) the element consists of two flat, electrically insulating carriers (16, 16'), whose materials each have a dielectric constant εᵣ·_{carrier} which is greater than 50 (in words, εᵣ·_{carrier} > fifty) or at least greater than 30 (in words, εᵣ·_{carrier} > thirty), and which are each joined with one of their main surfaces, rear, layered on each other, and between them, there is a shared flat electrode (15) made of an electrically conductive material,
b) at least one band-shaped electric insulating layer (17, 17') made of a dielectric material is applied onto the other main surfaces of the carriers (16, 16') which are exposed to the air, whereby the insulating layer (17, 17') only partially covers the front of the carriers (16, 16'),
c) the dielectric constant of the carriers (16, 16') and that of the insulating layers (17, 17') are different, whereby, at a dielectric constant of the carriers (16, 16') of each εᵣ·_{carrier}°> fifty, the dielectric constant of each of the insulating layers (17, 17') is between 50°>εᵣ·_{insulating layer}·> 5 and, at a dielectric constant of the carriers (16, 16') of each εᵣ·_{carrier}°> thirty, the dielectric constant of the insulating layers (17, 17') is between 30 >εᵣ·_{insulating layer}·> 5, so that the mirror discharge effect occurs,
d) a band-shaped electrode (18, 18') made of an electrically conductive material that only partially covers the insulating layers (17, 17'), is situated on each of the insulating layers (17, 17'),
e) so that the two carriers (16, 16') with the shared electrode (15) situated in-between and the insulating layers (17, 17') with the upper electrodes (18, 18') are joined to form a flat assembly (14).

16. The device according to Claim 15, **characterized in that**
the outer upper electrodes (18, 18') of the flat assembly (14), which can be touched from the outside, are grounded or connected to the earth.

17. The device according to Claim 1 or 15, **characterized in that**
the carrier or carriers consist of a flexible dielectric carrier material in order to form a band-shaped, rollable spiral device (19) or flat assembly (19).

## Revendications

1. Dispositif de production d'un plasma pour la production d'ozone et/ou d'ions d'oxygène dans l'air, d'après le principe de la décharge à barrière diélectrique, avec deux électrodes (3,4) auxquelles est appliquée une haute tension d'un générateur de tension alternative et entre lesquelles est disposé un corps électriquement isolant (1,7), **caractérisé en ce que**
a) le corps est un support (1,7) plat électriquement isolant dont le matériau présente une constante diélectrique ε_{rSupport} supérieure à 50 (en lettres ε_{rSupport} > cinquante) ou au moins supérieure à 30 (en lettres ε_{rSupport} > trente),
b) sur l'une des surfaces principales du support (1,7), le côté verso, est appliquée une électrode plate (4), l'électrode inférieure (4), consistant en un matériau électroconducteur,
c) sur l'autre surface principale du support (1,7), le côté recto qui est exposé à l'air, est appliquée au moins une couche isolante (2,8) en forme de bande consistant en un matériau diélectrique, la couche isolante (2,8) ne couvrant que partiellement le côté recto du support (1,7),
d) la constante diélectrique du support (1,7) et celle de la couche isolante (2,8) sont différentes, cela dit, étant donné une constante diélectrique du support (1,7) ε_{rSupport} > cinquante, la constante diélectrique de la couche isolante (2,8) se situe entre 50 > ε_{rCouche isolante} > 5 et étant donné une constante diélectrique du support (1,7) ε_{rSupport} > trente, la constante diélectrique de la couche isolante (2,8) se situe entre 30 > ε_{rCouche} ᵢₛₒₗₐₙₜₑ > 5, de sorte que l'effet de charges inversées s'instaure,
e) sur la couche isolante (2,8) est disposée une électrode en forme de bande (3,10), l'électrode supérieure (3) consistant en un matériau électroconducteur, qui ne recouvre que partiellement la couche isolante (2,8).

2. Dispositif selon la revendication 1, **caractérisé en ce que**
la couche isolante (2,8) consiste en plusieurs sous-couches électriquement isolantes dont les constantes diélectriques diminuent au fur et à mesure que l'écart par rapport au support (1,7) croît, de sorte que la sous-couche supérieure présente la plus petite constante diélectrique des sous-couches, l'électrode supérieure (3,10) étant disposée sur la couche supérieure des sous-couches.

3. Dispositif selon la revendication 1 ou 2, **caractérisé en ce que**
étant donné une constante diélectrique du support (1,7) ε_{rSupport} au moins supérieure à 30 et en présence de plusieurs couches isolantes (2,8), les constantes diélectriques ε_{rCouches isolantes} sont échelonnées entre 5 jusqu'à moins de 30.

4. Dispositif selon la revendication 1, **caractérisé en ce que**
le support (1,7) et la couche isolante (2,8) ou les couches isolantes, sont en un matériau céramique (Al₂O₃) ou en verre, par exemple en polysilicium ou en silicium amorphe ou en matière plastique organique, en polyamide par exemple, la couche isolante (2,8) consistant le cas échéant également en un matériau obtenu par oxydation, par exemple un oxyde métallique comme l'oxyde de zinc.

5. Dispositif selon la revendication 1, **caractérisé en ce que**
l'épaisseur de la couche isolante (2,8) ou des couches isolantes (2,8) est inférieure à l'épaisseur du support (1,7), les épaisseurs se trouvant de préférence dans des rapports de 1 à 4 allant jusqu'à 1 à 25.

6. Dispositif selon la revendication 1, **caractérisé en ce que**
la ou les couches isolantes (2,8) sont des films en matières plastiques organiques électriquement isolantes, par exemple en polyamide ou en matière thermoplastique ou thermodurcissable ou en acrylate ou en polymères, les constantes diélectriques étant échelonnées lorsque l'on utilise plusieurs films.

7. Dispositif selon la revendication 1, **caractérisé en ce que**
le support (1,7) présente un format plat en longueur, de préférence rectangulaire, l'électrode inférieure (4) placée directement sur le support (1,7) couvrant sur une grande surface, de préférence entièrement ou presque entièrement le verso du support (1,7), et étant disposée géométriquement centrée en son milieu, et **en ce que** la couche isolante (2,8) se trouvant sur le côté recto du support (1,7), ainsi que l'électrode supérieure (3,10) se trouvant sur ladite couche isolante s'étendent le long de l'axe longitudinal (6) du support (1,7) chacune en forme de bande géométriquement centrée sur le support ou sur la couche isolante, la surface de l'électrode inférieure étant plus grande que la surface de la couche isolante.

8. Dispositif selon la revendication 1, **caractérisé en ce que**
les deux électrodes (3,4,10) sont conformées en grille ou en filet, la surface de l'électrode inférieure (4) étant plus grande que la surface de l'électrode supérieure (3,10).

9. Dispositif selon la revendication 1, **caractérisé en ce que**
la couche isolante (2,8) et l'électrode supérieure (3,10) qui est disposée dessus est structurée en forme de méandres, en forme de doigts ou en peigne et disposée géométriquement centrée sur le support (1,7), l'électrode supérieure (3,10) parcourant également la couche isolante (2,8) géométriquement en son milieu.

10. Dispositif selon la revendication 9, **caractérisé en ce que**
l'alimentation de l'électrode supérieure (3,10) en tension électrique du générateur de tension alternative s'effectue via une résistance électrique (12), si l'électrode supérieure (3,10) est configurée en forme de méandre, de jetée allongée ou de peigne, une telle résistance (12) existant comme point d'alimentation à chaque méandre, chaque jetée allongée ou chaque dent de peigne (11).

11. Dispositif selon la revendication 1, **caractérisé en ce que**
l'électrode supérieure (3,10) consiste en un matériau électriquement conducteur ou en un matériau électriquement semi-conducteur.

12. Dispositif selon la revendication 11, **caractérisé en ce que**
l'électrode supérieure (3,10) consiste en un des matériaux suivants : graphite ou carbone
ou en alliages de métal électroconducteurs avec des travaux de sortie de l'électrode plus faibles tels le titanate de baryum, le titanate de baryum circonium, le titanate de baryum gallium
ou en oxydes de métal dopés semi-conducteurs, tels l'oxyde de zinc, l'oxyde stannique, le trioxyde de tungstène, l'oxyde ferreux.

13. Dispositif selon la revendication 1, **caractérisé en ce que**
l'électrode inférieure (4) consistant par exemple en un platine métallisé ou qui est déposée par galvanisation est isolée vers l'extérieur par une couche de verre très mince et passivée.

14. Dispositif selon la revendication 1, **caractérisé en ce que**
les rapports de surface entre l'électrode supérieure (3,10) et la couche isolante (2,8) et le support (1,7) sont de l'ordre de 1:4:8.

15. Dispositif de production d'un plasma pour la production d'ozone et/ou d'ions d'oxygène dans l'air, d'après le principe de la décharge à barrière diélectrique, avec deux électrodes (18,18',15) auxquelles est appliquée la haute tension d'un générateur de tension alternative et entre lesquelles est disposé un corps électriquement isolant (16,16'),
**caractérisé en ce que**
a) le corps consiste en deux supports (16,16') plats électriquement isolants dont les matériaux présentent chacun une constante diélectrique ε_{rSupport} supérieure à 50 (en lettres ε_{rSupport} > cinquante) ou au moins supérieure à 30 (en lettres ε_{rSupport} > trente), et qui chacun avec l'une de leurs surfaces principales, le côté verso, sont assemblés en superposition et entre lesquels se trouve une électrode plate commune (15) consistant en un matériau électroconducteur,
b) sur les autres surfaces principales des supports (16,16') exposées à l'air, est appliquée au moins une couche isolante (17,17') en forme de bande consistant en un matériau diélectrique, la couche isolante (17,17') ne couvrant que partiellement le côté recto des supports (16,16'),
c) la constante diélectrique des supports (16,16') et celle des couches isolantes (17,17') sont différentes, cela dit, étant donné une constante diélectrique des supports (16,16') de ε_{rSupport} > cinquante pour chacun des supports, la constante diélectrique des couches isolantes (17,17') est entre 50 > ε_{rCouche isolante} > 5 pour chacune des couches isolantes et étant donné une constante diélectrique des supports (16,16') de ε_{rSupport} > trente pour chacun des supports, la constante diélectrique des couches isolantes (17,17') est entre 30 > ε_{rCouche isolante} > 5, de sorte que l'effet des charges inversées s'instaure,
d) sur chacune des couches isolantes (17,17') est disposée une électrode en forme de bande (18,18') consistant en un matériau électroconducteur, qui ne recouvre que partiellement les couches isolantes (17,17').
e) les deux supports (16,16') avec l'électrode commune (15) située entre eux et les couches isolantes (17,17') avec les électrodes supérieures (18,18') sont assemblées en un groupe de composants plat (14).

16. Dispositif selon la revendication 15, **caractérisé en ce que**
les deux électrodes supérieures extérieures (18,18') du groupe de composants plat (14) que l'on peut toucher de l'extérieur sont mises à la terre ou à la masse.

17. Dispositif selon la revendication 1 ou 15, **caractérisé en ce que**
le ou les supports consiste(nt) en un matériau support diélectrique pour la formation d'un dispositif (19) ou d'un groupe de composants plat (19) en forme de bande, pouvant être mis en rond ou en spirale.
